(19) Europäisches Patentamt
European Patent Office
Office européen des brevets

(11) Veröffentlichungsnummer : **0 074 029**
**B1**

(12) # EUROPÄISCHE PATENTSCHRIFT

(45) Veröffentlichungstag der Patentschrift : **06.05.87**

(51) Int. Cl.⁴ : **A 22 B 7/00**

(21) Anmeldenummer : **82107870.6**

(22) Anmeldetag : **26.08.82**

(54) **Vorrichtung zum Halten eines hängend geförderten Tierkörpers in gewünschter Stellung.**

(30) Priorität : **28.08.81 DE 3133988**

(43) Veröffentlichungstag der Anmeldung : **16.03.83 Patentblatt 83/11**

(45) Bekanntmachung des Hinweises auf die Patenterteilung : **06.05.87 Patentblatt 87/19**

(84) Benannte Vertragsstaaten :
**AT BE CH DE FR GB IT LI NL SE**

(56) Entgegenhaltungen :
**DE-C- 931 571**
**GB-A- 1 121 754**
**NL-A- 7 109 679**

(73) Patentinhaber : **Banss Maschinenfabrik GmbH & Co. KG**
**Industriestrasse**
**D-3560 Biedenkopf (DE)**

(72) Erfinder : **Gerlach, Curt, Ing.**
**Urbanstrasse 7**
**D-3560 Biedenkopf (DE)**
Erfinder : **Kaufmann, Siegfried, Ing.**
**Hauptstrasse 19**
**D-3563 Dautphetal 1 (DE)**

(74) Vertreter : **Klunker, Hans-Friedrich, Dr. et al**
**Patentanwälte Klunker . Schmitt-Nilson . Hirsch Winzererstrasse 106**
**D-8000 München 40 (DE)**

**EP 0 074 029 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Vorrichtung zum Halten eines hängend geförderten, Tierkörpers in gewünschter Stellung, mit einer Halteeinrichtung, in die der Tierkörper in einer vorbestimmten Lage einbringbar ist und die den Tierkörper in der gewünschten Stellung hält.

In Schlachtanlagen, beispielsweise für Schweine oder Rinder, werden üblicherweise Fördereinrichtungen verwendet, meist in Form einer sogenannten Rohrbahn, mit der die Schlachttiere von einer Betäubungsstation nacheinander zu verschiedenen Verarbeitungsstationen gefördert werden. Üblicherweise hängt man dabei die Schlachttiere an einem Hinterbein oder auch an beiden Hinterbeinen an einer Kette auf, so daß sie sich um ihre Längsachse drehen können. Für manche der Weiterverarbeitungsschritte ist es erforderlich, die Schlachttiere je vorübergehend in einer gewünschten Stellung zu halten.

Bei einer aus der DE-C 931 571 bekannten Vorrichtung der eingangs genannten Art sind unterhalb und neben der Förderbahn fest im Boden verankerte Stützbügel vorgesehen. Die einzelnen hängenden Tierkörper können von Hand aus ihrer Hängelage herausgeschwenkt, über einen Stützbügel gelegt und dadurch in eine Schräglage gebracht werden, in der sie eine gewünschte Ruhelage einnehmen, in der sie von Hand abgestochen werden können. Diese bekannte Vorrichtung erfordert schwere körperliche Arbeit für das Herausschwenken der Tierkörper über den Stützbügel, wenn man bedenkt, daß in einer modernen Schlachtanlage täglich Tausende von Tieren geschlachtet werden.

Aus der GB-A-1 121 754 ist eine Fördervorrichtung für Schlachttiere mit einer Halteeinrichtung bekannt, die in Form eines seitlich zur Förderrichtung verschwenkbaren Gitters aufgebaut ist, mit dem der geförderte Tierkörper in eine bestimmte Bearbeitungsstellung geschwenkt werden kann. Um ein vorübergehendes Anhalten des Tierkörpers in der Bearbeitungsstation zu ermöglichen, ohne die gesamte Förderanlage jeweils anhalten zu müssen, ist der Halteeinrichtung einerseits eine Entkopplungseinrichtung zugeordnet, mittels welcher die Tierkörper-Aufhängevorrichtung von der Fördereinrichtung entkoppelt wird, und andererseits eine Zylinder-Kolben-Antriebseinrichtung, mittels welcher die Halteeinrichtung über eine vorbestimmte Strecke in Richtung der Tierkörperförderrichtung mit einer höheren Geschwindigkeit als der Fördergeschwindigkeit der Fördereinrichtung angetrieben werden kann. Auf diese Weise kann der an die Halteeinrichtung übergebene Tierkörper zur Bearbeitung vorübergehend angehalten und danach wieder an die kontinuierlich angetriebene Fördereinrichtung übergeben werden. Wird eine übliche Fördereinrichtung verwendet, bei welcher sich die Tierkörper frei um ihre Längsachse drehen können, hängt es vom Zufall ab, in welcher Drehstellung der Tierkörper auf die Halteeinrichtung gelangt und von dieser gehalten wird.

Aus der NL-A-7 109 679 ist eine Halteeinrichtung bekannt, mittels welcher an den Hinterbeinen aufgehängte Tierkörper während ihrer Förderung in Förderrichtung gesteuert um ihre Längsachse gedreht werden können, um einen Enthaarungsvorgang durchzuführen. Zu diesem Zweck werden eine sinuswellenförmig ausgebildete Laufschiene, auf der Laufkatzen mit je einem daran angeordneten Traggestell zum Aufhängen des Tierkörpers bewegt werden, und in den Bewegungsweg der Traggestelle hineinragende Hindernisrollen an denen die aufgehängten Hinterbeine abrollen, verwendet. Je nachdem, ob die Rückenseite oder die Bauchseite des Tierkörpers in Fahrtrichtung nach vorne gerichtet ist, muß die Hindernisrolle an den hinteren, dünneren oder den vorderen, dickeren Teil der Hinterbeine des Tierkörpers angepaßt sein. Die Tierkörper müssen daher in einer genau vorbestimmten Körperlage an das Traggestell angehängt werden. Ist nach üblicher Weise die Enthaarungsstation nur eine von vielen Bearbeitungsstationen, an denen die Tierkörper vorbeigefördert werden, sind die Tierkörper von der Hauptfördereinrichtung abgenommen und in der vorbestimmten Körperhaltung an die Traggestelle der für die Enthaarungsstation vorgesehenen Sonderfördereinrichtung gehängt worden.

Aufgabe der Erfindung ist es, eine Vorrichtung der eingangs genannten Art verfügbat zu machen, welche die um ihre Längsachse frei drehbar geförderten Schlachttiere selbsttätig in die gewünschte Stellung bringen kann.

Bei einer Vorrichtung zum Halten eines hängend geförderten Tierkörpers in gewünschter Stellung, mit einer Halteeinrichtung, in die der Tierkörper in einer vorbestimmten Lage einbringbar ist und die den Tierkörper in der gewünschten Stellung hält, wird diese Aufgabe dadurch gelöst, daß der Halteeinrichtung ein durch Zusammenwirken mit nicht zum Aufhängen benutzten, seitlich abstehenden Beinen des Tieres zusammenwirkendes Hindernis vorgeschaltet ist, das den Tierkörper bei dessen Weiterförderung in eine Lage mit dem Rücken voraus dreht, und daß die Halteeinrichtung den Tierkörper in der von dem Hindernis bewirkten Lage annimmt und in dieser Lage oder nach einer weiteren Lageveränderung in der gewünschten Stellung hält.

Bei einer besonders bevorzugten Ausführungsform ist das Hindernis durch beidseits der Förderbahn angeordnete Zäune mit vertikal verlaufenden Hindernisstreben gebildet, haben die Zäune in einem Mittelteil, in dem sie parallel zur Förderbahn verlaufen, einen Abstand voneinander, der etwas größer ist als der Tierrumpfdurchmesser im Bereich der Zäune, und gehen den Mittelteilen Anfangsteile der Zäune voraus, die in trichterartig sich verjüngendem Abstand von der Förderbahn auf die Mittelteile zulaufen. Wenn Tierkörper in unerwünschter Drehstellung auf die Zäune zulaufen, verfangen sich ihre vom Körper abstehenden Beine, beispielsweise die Vorderbeine, wenn die Tiere an einem Hinterbein oder an beiden Hinterbeinen hängend gefördert werden, zwischen den Hindernisstreben und werden infolge ihrer Weiterbeförderung und des Zurückhaltens des zwischen die Hindernisstreben geratenen abstehendes Beines in die Lage mit dem Rücken voraus gedreht. Um zu vermeiden, daß bei einem Tier, das mit den Beinen voraus gefördet auf das Hindernis zuläuft, ein nach der einen Seite abstehendes Bein in den auf der einen Seite der Förderbahn befindlichen Zaun und ein nach der anderen Seite abstehendes Bein in den auf der anderen Seite der Förderbahn befindlichen Zaun eingreift, wodurch das Weiterfördern des gesamten Tierkörpers behindert wäre, sind die Anfangsteile und die an sie anschließenden Enden der Mittelteile vorteilhafterweise in Förderrichtung gegeneinander versetzt.

In besonders bevorzugter Ausführungsform ist die Halteeinrichtung durch eine etwa vertikal verlaufende, U-förmige Halterinne für die Aufnahme wenigstens eines Teils des Tierkörpers gebildet. Die Halterinne kann in der Förderbahn angeordnet sein, mit der Rinnenöffnung zum Rücken des ankommenden Tierkörpers weisend. Sobald sie den Tierkörper aufgenommen hat, kann die Rinne dann in eine Stellung gedreht werden, in der ihre den Tierkörper haltende Rinnenöffnung quer zur Förderbahn weist. Falls erwünscht, kann die Halterinne in dieser Drehstellung noch quer zur Förderbahn bewegt werden, wenn die gewünschte Stellung des Tierkörpers ein Auslenken des Tierkörpers aus der normalen Hängelage erfordert. Nachdem dann der Bearbeitungsvorgang an dem Tierkörper vorgenommen worden ist, kann dann die Halterinne mit der Rinnenöffnung in die Förderrichtung weisend gedreht werden, um den Tierkörper für die Weiterförderung freizugeben.

Eine andere Möglichkeit, wie sie bei einer der nachfolgend beschriebenen Ausführungsformen verwirklicht ist, besteht darin, die Halteeinrichtung in Ruhestellung seitlich der Förderbahn anzuordnen, mit der Rinnenöffnung zur Förderbahn weisend. In diesem Fall ist es vorteilhaft, zwischen dem Hindernis und der Halteeinrichtung an der Förderbahn eine Schikane anzuordnen, die den Tierkörper bei dessen Weiterförderung in eine Lage mit dem Rücken zur Halteeinrichtung dreht. Diese Schikane kann in bevorzugter Weise durch eine Anlaufkante gebildet sein, die vom Ende des Mittelteils des auf der Seite der Halteeinrichtung befindlichen Zauns aus in Förderrichtung schräg in die Förderbahn hineinverläuft, so daß der geförderte Tierkörper gegen die Anlaufkante gelangt und bei seiner Weiterförderung an der Ablaufkante abrollend gedreht wird.

Bevorzugtermaßen sind an den Innenseiten der beiden Rinnenränder Anpreßstücke vorgesehen, die an die Seiten eines in der Halterinne befindlichen Tierkörpers andrückbar sind. Dabei sind die Anpreßstücke vorzugsweise in Form von kreisbogenförmigen Halteplatten ausgebildet. Durch diese Anpreßstücke wird ein sicheres Halten der Tierkörper in der Halterinne gewährleistet, auch wenn die Halterinne zusammen mit dem in ihr aufgenommenen Tierkörper in zur Rinnenöffnung entgegengesetzte Richtung bewegt werden müßte, um die gewünschte Stellung, oder falls mehrere Bearbeitungsvorgänge in verschiedenen Stellungen des Tierkörpers vorgenommen werden sollen, eine der gewünschten Stellungen einnehmen zu können. Vorzugsweise wird man den Bearbeitungsvorgang jedoch so einrichten, daß die gewünschte Stellung dann eingenommen ist, wenn die Halterinne zusammen mit dem sie aufnehmenden Tierkörper quer zur Förderrichtung in Richtung der Rinnenöffnung soweit bewegt oder verschwenkt ist, daß der Tierkörper nicht mehr frei an der Rollbahn hängt, sondern aus der freien Hängelage ausgelenkt und mit dem Rücken in der Halterinne abgestützt ist.

In besonders bevorzugter Weise ist die Halterinne zwischen zwei verschwenkabren Armen befestigt, die ein Verschwenken der Halterinne quer zur Förderrichtung ermöglichen. In bevorzugter Weise kann zum Verschwenken der Haltearme eine Zylinder-Kolben-Einrichtung verwendet werden.

Da bei den üblichen Schlachtanlagen der Tierkörper von der Betäubungsstation bis zur letzten Bearbeitungsstation mit einer durchgehenden Fördereinrichtung gefördert wird, ist es von Vorteil, wenn die Fördereinrichtung nicht für einen der Bearbeitungsvorgänge angehalten werden muß. Für den Fall, daß der Bearbeitungsvorgang am geförderten Tierkörper vorgenommen werden kann, ist es daher besonders zu bevorzugen, die Halteeinrichtung mit dem geförderten Tierkörper mitbewegbar zu machen, und zwar dadurch, daß die Halteeinrichtung bzw. jeder der die Halterinne tragenden Arme an einem in Förderrichtung hin- und herbewegbaren Schlitten befestigt ist.

Für den Fall einer mit dem geförderten Tierkörper mitbewegten Halteeinrichtung ist es zum leichten Erhalt einer vollständig synchronen Bewegung zwischen dem Tierkörper und der Halteeinrichtung besonders vorteilhaft, den Schlitten von der Fördereinrichtung mitnehmen zu lassen. Bei einer Fördereinrichtung in Form einer üblichen Rohrbahn mit Förderkette geschieht dies bevorzugtermaßen dadurch, daß der Schlitten einen in Eingriff und außer Eingriff mit der Förderkette bringbaren Dorn aufweist, der mittels einer Zylinder-Kolben-Einheit in die Mitnahmestellung bzw. die Lösestellung verschiebbar ist. Die Rückführung des von der Förderkette ein Stück mitgenommenen Schlittens in die Ausgangsstellung wird in bevorzugter Weise durch eine weitere Zylinder-Kolben-Einheit bewirkt, die einen Endes am beweglichen Schlitten und anderen Endes stationär gehalten ist und bei der Mitnahme des Schlittens durch die Förderkette ausgezogen wird und nach dem Lösen des Dorns aus der Kette den Schlitten wieder in die Ausgangsstellung zurückzieht.

Für den Fall, daß die Bearbeitung an einer Stelle zwischen den Vorderbeinen des Tieres vorgenommen werden soll und die Vorderbeine von der Haltereinrichtung soweit zusammengehalten werden, daß diese Bearbeitung behindert wird, kann der Halteeinrichtung eine Spreizvorrichtung zugeordnet werden, welche die Vorderbeine dann, wenn das Tier in der gewünschten Stellung gehalten wird, auseinanderspreizt. Diese Spreizvorrichtung kann druckmittelbetätigt sein und wird gegebenenfalls mit dem geförderten Tier und der Haltevorrichtung mitbewegt.

Eine für Schlachtanlagen mit hohem Durchsatz von Schlachttieren besonders bevorzugte Ausführungsform der erfindungsgemäßen Vorrichtung zeichnet sich dadurch aus, daß mehrere Halteeinrichtungen auf einer gemeinsamen geschlossenen Bahn umlaufend zu einem Halteeinrichtungskarussell zusammengefügt sind, das eine dem Hindernis nachgeordnete Tierkörperübernahmestation und eine Tierkörperabgabestation aufweist, und daß dem Halteeinrichtungskarussell eine Tierkörperfördervorrichtung zugeordnet ist, mit der jeder Tierkörper am Hindernis vorbei zu der jeweils in der Tierkörperübernahmestation ankommenden Halteeinrichtung und, von dieser in der gewünschter Stellung gehalten, bis zur Tierkörperabgabestation förderbar ist.

Dabei können die Halteeinrichtungen zwischen Tierkörperaufnahmestation und Tierkörperabgabestation mittels Hilfsenergiequellen, vorzugsweise fluidbetätigten Zylinder-Kolben-Einheiten, in die den Tierkörper in der gewünschten Stellung haltende Lage bewegbar sein. Eine bevorzugte andere Möglichkeit besteht darin, daß jede Halteeinrichtung mit einem Steuerkurvenfolgeglied versehen ist, das mit einer dem Halteeinrichtungskarussell zugeordneten Steuerkurve derart zusammenwirkt, daß die Halteeinrichtungen im Karussellbahnbereich zwischen Tierkörperaufnahmestation und Tierkörperabgabestation in die Lage gedrängt werden, in der sie die Tierkörper in der gewünschten Stellung halten.

Verwendet man auch bei diesen Ausführungsformen Halterinnen, die von einem verschwenkbaren Arm getragen werden, so kann man die Zylinder-Kolben-Einheiten bzw. die Steuerkurvenfolgeglieder vorteilhafterweise am verschwenkbaren Arm festlegen.

Für den Fall, daß die Schlachttiere mit den Halteeinrichtungen des Halteeinrichtungskarussells für einen Abstechvorgang in der gewünschten Lage gehalten werden sollen, kann man in besonders bevorzugteer Weise dem Halteeinrichtungskarussell, gegenüber dem Bereich zwischen Tierkörperaufnahmestation und Tierkörperabgabestation, ein mit dem Halteeinrichtungskarussell synchron umlaufendes Abstechkarussell zuordnen, das auf einer geschlossenen Bahn umlaufende Abstechmesser aufweist, die während des Synchronisationsumlaufs von Halteeinrichtungskarussell und Abstechkarussell je einer der Halteeinrichtungen gegenüberstehen und von Hand oder automatisch in die abzustechende Ader des von der jeweiligen Halteeinrichtung gehaltenen Tierkörpers einstechbar und mit dem weitergeförderten Tierkörper mitbewegbar sind. Dabei können Halteeinrichtungskarussell und Abstechkarussell vorteilhafterweise von einem gemeinsamen Antrieb angetrieben werden.

Um zu vermeiden, daß Blut, das als Speiseblut Verwendung finden soll, über den möglicherweise verschmutzten Tierkörper läuft, ist es besonders vorteilhaft, die Abstechmesser des Abstechkarussells als Hohlstechmesser auszubilden, deren Hohlrohrteile über Blutschläuche mit einem Blutsammelbehälter verbunden sind. Dabei kann das Blut mittels Schwerkraft in den Blutsammelbehälter fließen oder etwa nach Art einer Milchmelkanlage in den Blutsammelbehälter gesaugt werden.

Eine weitere bevorzugte Ausgestaltung der Erfindung besteht darin, den Kopf des auszublutenden Tieres, insbesondere Schweins, beim Ausbluten, insbesondere während des Ausströmens der für die menschliche Ernährung nutzbaren Teilblutmenge am Anfang bzw. Schwallbluts, nach hinten in Rochtung Rücken zu neigen, damit das Blut möglichst lange frei und ohne über den Kopf und den Rüssel zu laufen abströmt. Dies kann vorzugsweise durch eine Stange von der von oben nach unten hängenden Unterseite des jeweiligen Kopfvorderendes oder mehrerer Kopfvorderenden in Reihe geschehen, gegen die das Kopfvorderende durch Verlagern des Tierkörpers in Richtung seiner Bauchseite in Anlage gebracht wird. Möglichkeiten für ein derartiges Bewegen sind in der vorliegenden Anmeldung offenbart.

Die erfindungsgemäße Vorrichtung kann beispielsweise zum Halten eines Schlachttieres beim Abstechen, insbesondere im Zusammenhang mit einer automatisierten Vorrichtung zum Abstechen von auszublutenden Schlachttieren eingesetzt werden.

Dabei kann das abzustechende Schlachttier mit Hilfe der erfindungsgemäßen Haltevorrichtung in einer gewünschten Relativstellung zur automatisierten Abstechvorrichtung gehalten werden.

Im folgenden werden noch einige vorteilhafte Weiterbildungen und Ausgestaltungen der erfindungsgemäßen Vorrichtung angegeben :

Bei dem Hindernis sind die Anfangsteile und die an sie anschließenden Enden der Mittelteile vorzugsweise in Förderrichtung gegeneinander versetzt.

Bei einer Halteeinrichtung, die sich in Ruhestellung seitlich der Förderbahn befindet, kann zwischen dem Ende des Hindernisses und der Halteeinrichtung an der Förderbahn eine Schikane angeordnet sein, die den Tierkörper bei dessen Weiterförderung in eine Lage mit dem Rücken zur Halteeinrichtung dreht.

Diese Schikane kann durch eine Auflaufkante gebildet sein, die vom Ende des Mittelteils des auf der Seite der Halteeinrichtung befindlichen Zauns aus in Förderrichtung schräg in die Förderbahn hinein verläuft, so daß der geförderte Tierkörper gegen die Auflaufkante gelangt und bei seiner Weiterförderung an der Auflaufkante abrollend gedreht wird.

Die an dem Tierkörper anliegende Halterinne kann vorzugsweise von der Rückenmitte bis etwa zum Halsansatz, bevorzugt bis zum Kopf, des Tierkörpers reichen.

Ist die Halterinne an mindestens einem quer zur Förderrichtung verschwenkbaren Arm befestigt, kann der Arm von einem in Förderrichtung hin- und herbewegbaren Schlitten gehalten werden.

In der Halterinne können an die Seiten eines in der Halterinne befindlichen Tierkörpers andrückbare Anpreßstücke vorgesehen sein, vorzugsweise in Form von kreisbogenförmigen Halteplatten, die an den Innenseiten der beiden Rinnenränder der Halterinne angeordnet sind.

Die Anpreßstücke können je mittels einer Zylinder-Kolben-Einheit in Richtung auf den in der Halterinne befindlichen Tierkörper drückbar und in eine Freigabestellung rückziehbar sein.

Der die Halterinne tragende Arm kann mittels einer zwischen dem Arm und einem den Arm tragenden Rahmen angeordneten Zylinder-Kolben-Einheit verschwenkbar sein.

Bei Verwendung einer Fördereinrichtung in Form einer eine Förderkette und Mitnehmer umfassenden Rohrbahn kann der Schlitten mittels einer die Mitnehmer der Förderkette vorschiebbaren Dorns von der Förderkette mitnehmbar sein. Der Dorn kann mittels einer am Schlitten angeordneten Zylinder-Kolben-Einheit in und außer Eingriff mit den Mitnehmern der Förderkette bringbar sein.

Der Schlitten kann mit einem Ende einer Zylinder-Kolben-Einheit verbunden sein, deren anderes Ende stationär gehalten ist und die Zylinder-Kolben-Einheit kann bei der Mitnahme des Schlittens aus seiner Ausgangsstellung ausgezogen werden und die Rückführung des Schlittens in dessen Ausgangsstellung bewirken.

Der Halteeinrichtung kann eine Spreizvorrichtung zugeordnet sein, die bei dem in der gewünschten Stellung gehaltenen Tier die Vorderbeine auseinanderspreizt.

Die Spreizvorrichtung kann Druckmittel betätigbar sein.

Die Spreizvorrichtung kann mit dem geförderten Tier und der Halteeinrichtung mitbewegbar sein.

Bei der Kombination von Halteeinrichtungskarussell und Abstechkarussell können das Halteeinrichtungskarussell und das Abstechkarussell von einem gemeinsamen Antrieb angetrieben werden.

Die Erfindung und Weiterbildungen der Erfindung werden nun anhand einer Ausführungsform näher erläutert. In der Zeichnung zeigen :

Figur 1 eine schematische Draufsicht auf eine Ausführungsform der neuen Haltevorrichtung ;

Figur 2 eine Seitenansicht der Haltevorrichtung gemäß Fig. 1, gesehen quer zur Förderrichtung ;

Figur 3 eine Seitenansicht der Haltevorrichtung nach Fig. 1, gesehen in Vorderrichtung ;

Figur 4 eine schematisierte Draufsicht auf ein Halteeinrichtungskarussell und ein damit zusammenwirkendes Abstechkarussell ;

Figur 5 eine Seitenansicht des Halteeinrichtungskarussells ; und

Figur 6 eine Seitenansicht einer anderen Ausführungsform eines Halteeinrichtungskarussells mit der Seitenansicht eines Abstechkarussells.

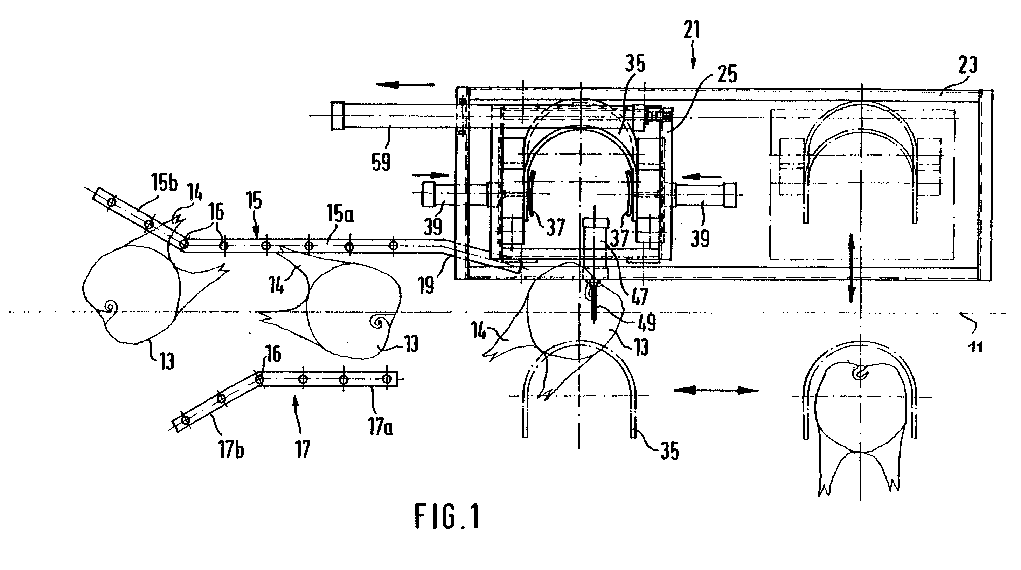

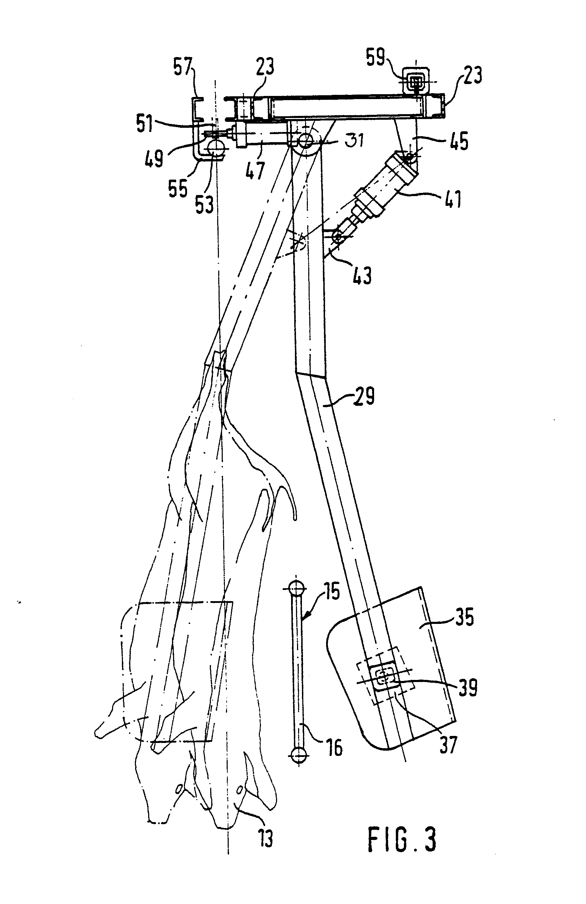

In Fig. 1 ist mit einer strichpunktierten Linie 11 eine Fördereinrichtung in Form einer Rohrbahn angedeutet, deren Aufbau deutlicher aus Fig. 3 entnehmbar ist. Die Förderung soll in Fig. 1 von links nach rechts stattfinden. Bei den Schlachttieren soll es sich beispielsweise um Schweine handeln. In Fig. 1 ist ein gefördertes Schwein 13 nacheinander in vier Lagen während des Fördervorgangs dargestellt.

Beidseits der Förderbahn sind Zäune angeordnet, nämlich in Förderrichtung gesehen ein linker Zaun 15 und ein rechter Zaun 17. Die Zäune weisen vertikal verlaufende Hindernisstreben 16 auf, die einen derartigen Abstand voneinander haben, daß zwischen ihnen vom Schweinekörper seitlich abstehende Vorderbeine 14 eingreifen können. Die Zäune 15 und 17 weisen Mittelteile 15a bzw. 17a auf, die parallel zur Förderbahn 11 verlaufen, und zwar vorzugsweise mit gleichem Abstand von der Förderbahn 11. Der Abstand zwischen den beiden Zäunen 15 und 17 ist so groß, daß die Rümpfe der geförderten Schweinekörper ohne Behinderung zwischen den beiden Zäunen 15 und 17 hindurchgefördert werden können. Den Zaunmittelteilen 15a und 17a gehen Zaunanfangsteile 15b bzw. 17b voraus, die im trichterartig sich verjüngendem Abstand von der Förderbahn 11 auf die Zaunmittelteile 15a bzw. 17a zulaufen. Der rechte Zaunanfangsteile 17b und die Beginnstelle des rechten Zaunmittelteils 17a sind in Förderrichtung gegenüber dem linken Zaunanfangsteil 15b und der Beginnstelle des linken Zaunmittelteils 15a versetzt.

An das Ende des linken Zaunmittelteils 15a schließt sich eine Schikane in Form einer Auflaufkante 19 an, die vom Ende des linken Zaunmittelteils 15a in Förderrichtung schräg in den Förderweg des geförderten Schweins 13 hineinragt. Diese Auflaufkante 19 kann durch eine Verlängerung eines Längsteils des linken Zaunmittelteils 15a gebildet sein.

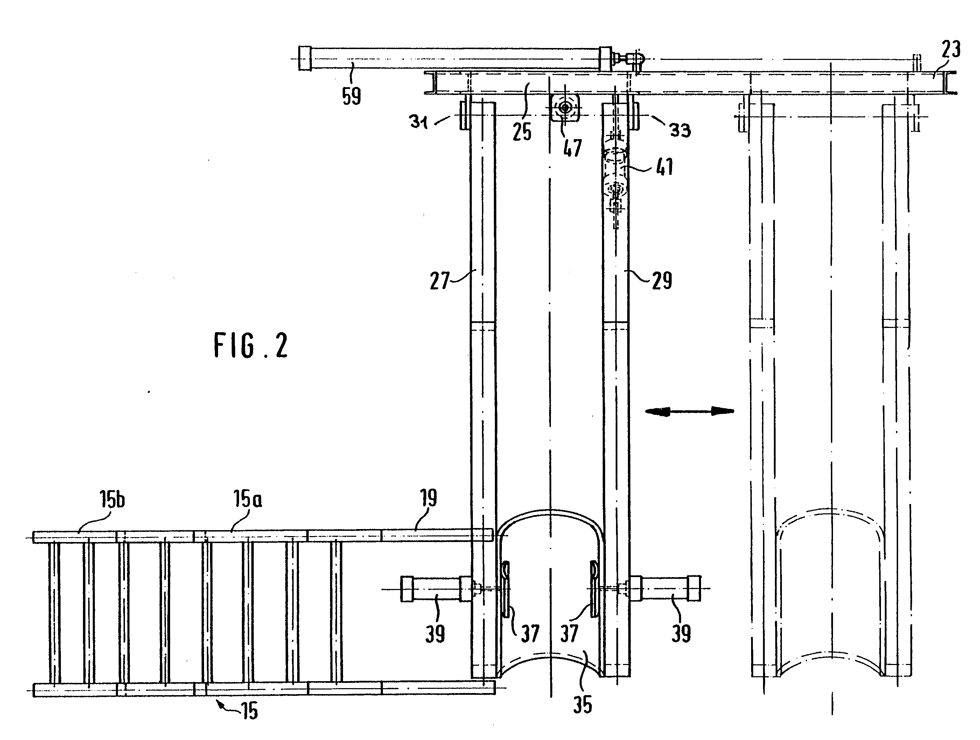

An das Ende des Hindernis in Form der Zäune 15 und 17 schließt sich die eigentliche Haltevorrichtung 21 an. Sie weist einen stationären Rahmen 23 auf, von dem ein in Förderrichtung hin- und herbewegbarer Schlitten in Form eines bewegbaren Rahmens 25 gehalten wird. Wie am besten die Figuren 2 und 3 zeigen, sind am bewegbaren Rahmen 25 zwei Arme 27 und 29 angeordnet, die um eine Schwenkachse 31 bzw. 33 quer zur Förderrichtung der Förderbahn 11 verschwenkbar sind. An den unteren Enden der verschwenkbaren Arme 27 und 29 ist eine in etwa vertikal verlaufende Halterinne 35 befestigt, die sich bei der in den Figuren 1 und 3 mit durchgehenden Linien gezeigten Ruhestellung seitlich neben der Förderbahn 11 außerhalb der Bewegungsbahn des geförderten Schweins 13 befindet. Die Rinnenöffnung der Halterinne 35 weist dabei in Richtung zur Förderbahn 11. Die Halterinne 35 hat eine vertikale Höhe, die gemäß Fig. 3 etwa vom Kopfansatz des Schweines bis ungefähr zu dessen Rückenmitte reicht. Die Halterinne 35 ist so dimensioniert, daß sie den Rumpf des Schweinekörpers aufnehmen und mit ihren Seitenrändern übergreifen kann.

Wie am besten in Fig. 1 zu sehen ist, ist an der Innenseite eines jeden Seitenrandes der Halterinne 35 ein Anpreßstück in Form einer kreisbogenförmigen Halteplatte 37 vorgesehen.

Den Halteplatten 37 sind Andruck-Zylinder-Kolben-Einheiten 39 zugeordnet, mit denen die Halteplatten 37 gegen die Seitenteile des in der Halterinne 35 aufgenommenen Schweins 13 gedrückt oder zu den Seitenrändern der Halterinne 35 zurückgezogen werden können. Mit den Halteplatten 37, die vorzugsweise mit einer rutschvermindernden Oberfläche versehen sein können, kann ein in der Halterinne 35 aufgenommener Schweinekörper sicher gehalten werden, unabhängig von der Dicke des einzelnen Schweinekörpers und unabhängig von der Schwenklage der Arme 29, d. h., unabhängig davon, ob sich die Halterinne 35 in einer Schwenklage befindet, in der sich der Rücken des Schweinekörpers am Rinnenboden abstützen kann, oder in einer Schwenklage, in welcher der Schweinekörper ohne das Angreifen der Halteplatten 37 an ihm aus der Halterinne 35 herauspendeln würde.

Die Arme 27 und 29 werden je mit einer Zylinder-Kolben-Einheit 41, im folgenden Schrägzylinder genannt, verschwenkt. Die Schrägzylinder sind einen Endes an einer quer von Arm 27 bzw. 29 vorstehenden Lasche 43 und anderen Endes an einer nach unten vom bewegbaren Rahmen 25 abstehenden Lasche 45 angelenkt. Mit Hilfe dieser Schrägzylinder 41 können die Arme 27 und 29 und damit die Halterinne 35 quer zur Förderrichtung der Förderbahn 11 verschwenkt werden, und zwar aus der in den Figuren 1 und 3 mit durchgehenden Linien gezeigten Ruhestellung in die in den Figuren 1 und 3 gestrichelt gezeigte Haltestellung. In dieser Haltestellung ist das von der Halterinne 35 aufgenommene Schwein 13 aus der freihängenden Lage, wie sie in Fig. 3 mit ausgezogener Linie skizziert ist, in eine in Fig. 3 strichpunktiert gezeichnete Schwenklage gedrängt, in der sich der Schweinerücken am Rinnenboden der Halterinne 35 abstützen kann und somit in definierter Lage gehalten wird.

Eine Synchronisation zwischen der Bewegung der Halterinne 35 in Förderrichtung und der Bewegung des geförderten Schweins 13 wird folgendermaßen erreicht :

Auf der zum geförderten Schwein 13 weisenden Seite ist am bewegbaren Rahmen 25 eine weitere Zylinder-Kolben-Einheit 47, im folgenden « Dornzylinder » befestigt, mittels der ein Dorn 49 quer zur Förderrichtung vorschiebbar und einziehbar ist. Der Dorn 49 greift im vorgeschobenen Zustand zwischen zwei Mitnehmer 51 einer (nicht gezeigten) Förderkette einer Rohrbahn 53, die mittels eines Winkels 55 an einem Halteträger 57 aufgehängt ist. In Fig. 3 ist einer der Mitnehmer 51 gestrichelt angedeutet.

Eine weitere Zylinder-Kolben-Einheit 59, im folgenden Rückholzylinder genannt, ist einen Endes am bewegbaren Rahmen 25 und anderen Endes stationär befestigt. Während der bewegbare Rahmen 25 über den vorgeschobenen Dorn 49 von einem Mitnehmer 51 der Förderkette in synchroner Bewegung mit dem geförderten Schwein 13 mitgenommen wird, wird der Rückholzylinder 59 ausgezogen. Wenn dann der Dorn 49 am Ende der Mitbewegung in der in Fig. 1 rechts gestrichelt dargestellten Stellung das Ende seiner Mitbewegung mit dem geförderten Schwein 13 erreicht hat, wird der Dorn 49 durch Zurückziehen außer Eingriff mit den Mitnehmern 51 der Förderkette gebracht. Daraufhin wird der bewegbare Rahmen 25 vom Rückholzylinder 59 in seine in Fig. 1 links in ausgezogenen Linien dargestellte Ausgangsstellung zurückgeführt.

Die beschriebene Ausführungsform einer erfindungsgemäßen Vorrichtung arbeitet folgendermaßen :

Wenn ein an den Füßen aufgehängtes Schwein 13 mittels der Rohrbahn 53 bis in den Trichterbereich der Zäune 15 und 17 gefördert ist, möge es beispielsweise die in der ersten, in Fig. 1 ganz links dargestellten Position mit den vom Rumpf abstehenden Vorderfüßen 14 zum linken Zaun 15 weisen. Das in Draufsicht linke Vorderbein 14 des Schweins 13 verfängt sich zwischen zwei Hindernisstreben 16 des linken Zaunanfangsteils 15b. Infolge der Weiterförderung des Schweins greift die in Förderrichtung nächstfolgende Hindernisstrebe 16 so an dem Vorderbein 14 des Schweins 13 an, daß das Schwein 13 im Gegenuhrzeigersinn gedreht wird. Dabei gelangt das in Draufsicht rechte Vorderbein des Schweins 13 zwischen zwei Hindernisstreben 16 des linken Zaunmittelteils 15, so daß das Schwein bei seiner Weiterförderung durch den Angriff an seinem rechten Vorderbein noch weiter im Gegenuhrzeigersinn gedreht wird, bis es schließlich die in Fig. 1 von links gesehene zweite Position erreicht. Bei seiner Weiterförderung weist der Rücken des Schweins 13 in Förderrichtung und die seitlich vom Rumpf abstehenden Vorderbeine 14 werden hinterhergezogen. Da der Abstand zwischen den Zaunmittelteilen 15a und 17a nicht viel breiter ist als der Rumpfdurchmesser des Schweines 13 in Höhe der Zäune 15 und 17, wird das Schwein 13 während seiner Weiterförderung an einer weiteren Verdrehung gehindert, so daß es mit dem Rücken voraus ausgerichtet bleibt.

Wäre das Schwein in der in Fig. 1 ganz linken Position so gedreht, daß seine Vorderbeine 14 in Richtung zum rechten Zaun 17 weisen, würde sich sein in der Draufsicht rechtes Vorderbein 14 zwischen den Hindernisstreben 16 des rechten Zaunanfangsteils 17b verfangen, so daß das Schwein 13 im Uhrzeigersinn gedreht würde, bis es ebenfalls die in Fig. 1 von links gesehen zweite Position einnimmt, d. h., mit dem Rücken voraus gefördert wird.

Mit der Versetzung der Zaunanfangsteile 15b und 17b in Förderrichtung gegeneinander wird erreicht, daß sich bei einem mit den Vorderbeinen 14 voraus ankommenden Schwein nicht das links abstehende Vorderbein im linken Zaun 15 und gleichzeitig das rechts abstehende Vorderteil 14 im rechten Zaun 17 verfängt und die Weiterförderung des gesamten Schweins 13 behindert ist. In einem solchen Fall, in dem das Schwein 13 mit beiden Vorderbeinen 14 voraus ankommt, greift je nachdem, ob das Schwein stärker zum linken Zaun 15 oder zum rechten Zaun 17 geneigt ist, nur entweder das Linke Vorderbein 14 in den linken Zaun 15 oder nur das rechte Vorderbein 14 in den rechten Zaun 17. Kommt das Schwein in diese Lage genau senkrecht hängend an, greift von den immer etwas seitlich abstehenden Vorderbeinen 14 das in Draufsicht in Fig. 1 linke Bein in den linken Zaun, so daß eine Drehung wie in Fig. 1 dargestellt, erfolgt.

Wenn dann das Schwein 13 mit dem Rücken voraus in den Bereich der Auflaufkante 19 gelangt, läuft das Schwein 13 auf diese Auflaufkante 19 auf, wird von dieser Auflaufkante 19 in Richtung zum zweiten Zaun 17 verschwenkt und führt auf der Auflaufkante 19 eine Abrollbewegung durch, infolge der es im Gegenuhrzeigersinn gedreht wird, und zwar in die in Fig. 1 von links gesehen dritte dargestellte Lage. Infolge der durch die Auflaufkante 19 bewirkten Auslenkung des Schwerpunktes des Schweins 13 kommt es im Anschluß an das Ende der Auflaufkante 19 zu einer Rückpendelbewegung des Schweins 13 in Richtung der Halterinne 35. Durch Verschwenken der Haltearme 27 und 29 mittels des Schrägzylinders 41 wird nun die Halterinne 35 mit ihrer Rinnenöffnung zum Rücken des Schweins 13 hin verschwenkt, so daß das Schwein 13 in der Halterinne 35 aufgenommen wird. Sobald mittels einer Erkennungseinrichtung, beispielsweise mit Hilfe eines Schalters, einer Lichtschranke oder dergleichen, festgestellt worden ist, daß ein Schwein 13 die Auflaufkante 19 passiert hat und in den Bereich der in Ausgangsstellung befindlichen Halterinne 35 gelangt ist, wird mit Hilfe des Dornzylinders 47 der Dorn 49 in Eingriff mit einem Mitnehmer 51 der Förderkette gebracht, so daß der bewegliche Rahmen 25 und damit die Halterinne 35 synchron mit dem weitergeförderten Schwein 13 mitbewegt werden.

Das Verschwenken der Halterinne 35 in Richtung zur Förderbahn 11 kann also auch so frühzeitig ausgelöst werden, daß die Halterinne 35 den Schweinekörper vom Ende der Auflaufkante 19 übernimmt, ohne daß der Schweinekörper noch eine Rückpendelbewegung in Richtung der in Ruhestellung befindlichen Halterinne 35 durchführt.

Durch Verschwenken der Arme 27 und 29 und damit der Halterinne 35 bei der Darstellung in Fig. 3 in Uhrzeigerrichtung wird das lotrecht hängende Schwein in die in Fig. 3 strichpunktiert gezeigte Lage verschwenkt, in der es keine Pendelbewegung mehr durchführen kann, da es von der Halterinne 35 abgestützt wird. Zur noch besseren Festlegung insbesondere derjenigen Schweine, die dünner als der Rinnendurchmesser sind, werden die Halteplatten 37 seitlich gegen den Schweinekörper gedrückt, so daß das Schwein abgesehen von der Förderbewegung vollständig ruhiggehalten wird.

In derjenigen Zeit, in welcher das nun ruhiggehaltene Schwein weitergefördert wird, bis der bewegbare Rahmen 25 seine in Fig. 1 rechts dargestellte Endposition erreicht hat, kann der Bearbeitungsvorgang am Schwein durchgeführt werden, beispielsweise das automatische Positionieren und Einstoßen eines Abstechmessers.

Zur besseren Zugänglichkeit der zu bearbeitenden, z. B anzustechenden Stelle können die Vorderbeine 14 des Tieres 13 mittels einer Spreizvorrichtung auseinandergespreizt werden, falls die Zugänglichkeit dieser Stelle ansonsten von den Vorderbeinen behindert würde. Dadurch wird beim Abstechen auch eine Verschmutzung des Abstechmessers durch die üblicherweise unsauberen Vorderbeine verhindert. Die Spreizvorrichtung kann durch spitzbogenförmig aufeinander zulaufende Rohre gebildet sein, die zwischen die Vorderbeine 14 des in der gewünschten Stellung gehaltenen Tieres 13 geschoben oder geschwenkt werden, vorzugsweise durch Druckmittelantrieb. Für den Fall, daß die Haltevorrichtung mit dem Schlachttier 13 mitverfahren wird, wird auch die Spreizvorrichtung mitbewegt.

Sobald der bewegbare Rahmen 25 in den Bereich seiner in Fig. 1 rechts gezeigten Endstellung kommt, wird die Halterinne 35 in die in Fig. 3 durchgehend gezeigte Ruhestellung zurückgeschwenkt, unter gleichzeitiger Zurückziehung der Halteplatten 37, so daß das Schwein 13 wieder von der Haltevorrichtung frei kommt und ungehindert weitergefördert werden kann. Gleichzeitig wird mit Hilfe des Dornzylinders 47 der Dorn 49 zurückgezogen und damit außer Eingriff mit dem Mitnehmer 51 der Förderkette gebracht. Der bewegbare Rahmen 25 wird dann vom Rückholzylinder 59 in seine Ausgangsstellung zurückgeführt. Dort steht die Haltevorrichtung dann für die Aufnahme und das Halten eines weiteren ankommenden Schweines 13 in gewünschter Stellung bereit.

Wie in den Figuren 1 und 3 gezeigt ist, ist der Rinnenboden der Halterinne 35 bei in Ruhestellung befindlicher Haltevorrichtung so gegen die Vertikale geneigt, daß er bei Verschwenkung in die Arbeitsstellung der Neigung des dann aus seiner vertikalen Hängelage herausgeschwenkten Schweinerückens angepaßt ist.

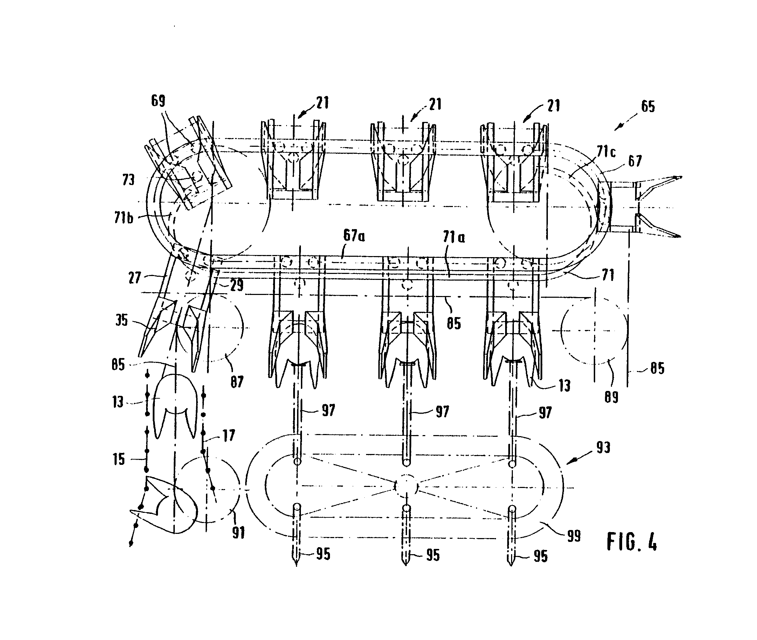

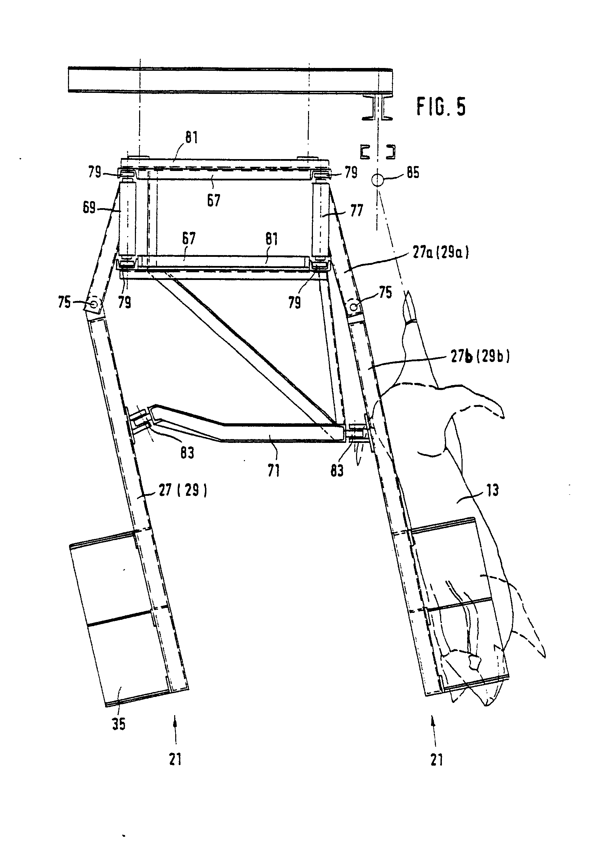

Die vorausgehend beschriebene Ausführungsform eignet sich insbesondere für kleinere Schlachtanlagen. Für größere Schlachtanlagen, bei denen ein möglichst großer Durchsatz von Schlachttieren erreicht werden soll. ist die in den Fig. 4 und 5 dargestellte Ausführungsform zu bevorzugen.

Bei dieser Ausführungsform sind mehrere, z. B.

acht Haltereinrichtungen 21 zu einem Halteeinrichtungskarussell 65 zusammengefaßt. Die einzelnen Halteeinrichtungen 21 laufen auf einer Karussellbahn 67 auf einer geschlossenen Bahn, vorzugsweise in der dargestellten Ovalform, um. Führungselemente 69 an den einzelnen Halteeinrichtungen 21 führen die Halteeinrichtungen auf der Karussellbahn 67. Der Karussellbahn ist eine Steuerkurvenbahn 71 zugeordnet, die mit Steuerfolgegliedern 73 an den einzelnen Halteeinrichtungen 21 zusammenwirkt. Dabei ist die Steuerkurvenbahn 71 gemäß Darstellung in Fig. 4 vorzugsweise in Form einer zweiten unvollständigen Ovalbahn ausgeführt, die in Querrichtung gegenüber der Karussellbahn 67 versetzt ist und einen Ovallängsbereich 71a aufweist, der parallel zum benachbarten Ovallängsteil 67a der Karussellbahn verläuft, und zwar außerhalb des Ovals der Karussellbahn 67.

Die einzelnen Halteeinrichtungen 21 des Halteeinrichtungskarussels 65 können gleich oder ähnlich wie die Halteeinrichtungen der Ausführungsform gemäß Figuren 1 bis 3 ausgebildet sein, allerdings ohne die bei jener Ausführungsform verwendete Schlittenanordnung zur Hin- und Rückbewegung der Halteeinrichtung. Wie den Figuren 4 und 5 entnehmbar ist, weist jede Halteeinrichtung wie bei der in den Figuren 1 bis 3 gezeigten Ausführungsform einen Haltekorb bzw. eine Halterinne auf, die von zwei Armen 27 und 29 getragen wird. Die Arme 27 und 29 sind mittels eines Gelenkes 75 in ihrer Längsachse verschwenkbar. Das Führungselement 69 einer jeden Halteeinrichtung ist vorzugsweise als Laufschlitten 77 ausgebildet, der die oberhalb der Gelenke 75 befindlichen nichtverschwenkbaren Teile 27a, 29a der Arme trägt. Der Laufschlitten ist mittels Laufrollen 79 in der zwei übereinanderliegende Führungsschienen 81 aufweisenden Karussellbahn 67 geführt. Unterhalb der Karussellbahn 67 ist die Steuerkurvenbahn 71 angeordnet, an der als Steuerfolgeglieder dienende Abtastrollen 83 angreifen, die an dem verschwenkbaren Teil 27b, 29b der Arme 27, 29 befestigt sind.

Beim Umlauf der einzelnen Halteeinrichtungen 21 um die Karussellbahn 67, bei der Darstellung in Fig. 4 im Gegenuhrzeigersinn, kommen die Steuerkurvenfolgeglieder 73 bzw. Abtastrollen 83 mit dem in Fig. 4 linken Rundteil 71b der Steuerkurvenbahn 71 in Eingriff und werden durch die seitliche Versetzung der Ovalachse der Steuerkurvenbahn 71 gegenüber der Ovalachse der Karussellbahn 67 zunehmend nach außen verschwenkt, wie es in Fig. 5 mit der rechten Halteeinrichtung gezeigt ist. Auf dem in Fig. 4 unteren Ovallängsteil 71a der Steuerkurvenbahn 71 bleiben die Halteeinrichtungen dann ausgeschwenkt. Während des Umlaufs um den in Fig. 4 rechten Rundteil der Karussellbahn 67 kommt der rechte Rundteil 71c der Steuerkurvenbahn 71 immer weiter in den Bereich innerhalb der Karussellbahn 67, so daß die Halteeinrichtungen 21 allmählich in ihre Ausgangsstellung zurückschwenken können, die in Fig. 5 auf der linken Seite dargestellt ist.

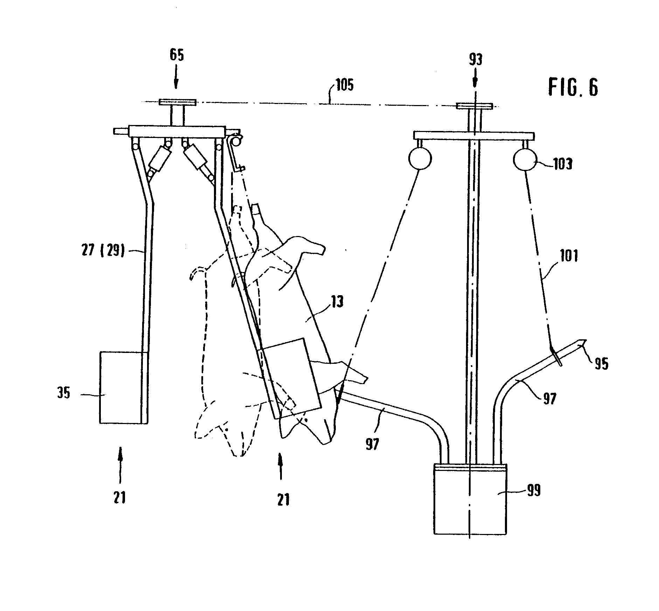

Fig. 6 zeigt eine Ausführungsform, bei welcher die einzelnen Halteeinrichtungen 21 des Halteeinrichtungskarussells 65 mittels preßluftbetätigter oder hydraulisch betätigter Zylinder-Kolben-Einheiten oder mittels elektromagnetischer Antriebe verschwenkt werden.

Die in Fig. 4 gezeigte Vorrichtung weist ein Hindernis 15, 17 auf, das in gleicher Weise wie das in den Figuren 1 und 2 gezeigte Hindernis aufgebaut sein kann, jedoch ohne die als Schikane wirkende Auflaufkante 19. In Fig. 4 ist das Hindernis 15, 17 nur sehr schematisch angedeutet. Seine Funktion ist genau die gleiche, wie sie im Zusammenhang mit den Figuren 1 bis 3 erläutert worden ist.

Die dem Ausgang des Hindernisses 15, 17 gegenüberliegende Position des Halteeinrichtungskarussels 65 stellt eine Tierkörperaufnahmestation dar, an welcher die mit dem Rücken voraus das Hindernis 15, 17 verlassenden Tierkörper in die jeweils zu diesem Zeitpunkt dem Hindernis gegenüberstehende Halteeinrichtung 21 geführt werden. Die Förderung der Tierkörper 13 geschieht mittels einer in Fig. 4 nur schematisch angedeuteten Fördervorrichtung mit vorzugsweise einer Förderkette 85 und zwei Umlenkrollen 87, 89 und einer Führungsrolle 91, mittels welchen die Förderkette die Tierkörper 13 durch das Hindernis 15, 17 in die jeweils an der Tierkörperaufnahmestation ankommende Halteeinrichtung 21 führt, von dort den jeweiligen Tierkörper mit der ihn aufnehmenden Halteeinrichtung 21 mitbewegt und den Tierkörper am Ende der sich an die Tierkörperaufnahmestation anschließenden Ovallängsstrecke der Karussellbahn 67 wieder aus der Halteeinrichtung 21 herausführt. Die Stelle, an welcher der Tierkörper wieder aus der Halteeinrichtung 21 herausgeführt wird, wird hier als Tierkörperabsgabestation bezeichnet.

Das Halteeinrichtungskarussell 65 kann beispielsweise mit einer Abstechanlage zusammenarbeiten, mittels welcher die in den einzelnen Halteeinrichtungen in gewünschter Stellung gehaltenen Schlachttiere während ihrer Mitbewegung mit den einzelnen Halteeinrichtungen abgestochen werden und danach ausbluten können. Die Abstechanlage ist in Form eines Abstechkarussells 93 aufgebaut, das mehrere auf einer Ovalbahn umlaufende Abstechmesser 95 aufweist. Die Abstechmesser 95 sind vorzugsweise als Hohlstechmesser ausgebildet, an deren rückwärtiges Ende ein Blutschlauch 97 angeschlossen ist, dessen nicht mit dem Hohlstechmesser 95 verbundenes Ende in einen Blutsammelbehälter 99 mündet. Die einzelnen Hohlstechmesser werden mittels eines Federzuges 101 von einer Führungsvorrichtung 103 gehalten, die auf einer Abstechkarussellbahn umläuft.

Der Abstand der einzelnen Hohlstechmesser 95 des Abstechkarussells 93 wird zweckmäßigerweise gleich dem Abstand zweier Halteeinrichtungen 21 des Halteeinrichtungskarussells 65 gewählt. Außerdem wird die Umlaufgeschwindigkeit des Abstechkarussells 93 relativ zur Umlaufgeschwindigkeit des Halteeinrichtungskarussells 65 so gewählt, daß die einzelnen Hohlstechmesser 95 mit gleicher Bahngeschwindigkeit wie die einzelnen Halteeinrichtungen 21 gefördert werden. Die Synchronisation zwischen Halteeinrichtungskarussell 65 und Abstechkarussell 93 kann man vorzugsweise durch einen gemeinsamen Antrieb erreichen, wie dies in Fig. 6 mit einer Transmission 105 angedeutet ist.

Die in den Fig. 4 und 6 dargestellte Kombination aus Halteeinrichtungskarussell 65 und Abstechkarussell 93 arbeitet folgendermaßen :

Mit Hilfe der Förderkette 85 werden Tierkörper 13, beispielsweise Schweine, vorzugsweise an einem Bein aufgehängt, auf das Hindernis 15, 17 zu gefördert. Durch den Eingriff zwischen abstehenden Beinen der Tierkörper 13 und dem Hindernis 15, 17 wird der Tierkörper 13 mit dem Rücken in Förderrichtung voraus gedreht. Nach dem Verlassen des Hindernisses 15, 17 gelangt dann der Tierkörper 13 in die an der Tierkörperübergabestation angekommene Halteeinrichtung 21. Dort wird der Tierkörper 13 in der Halterinne 35 teilweise umfangen und gegebenenfalls mit Anpreßstücken 37, wie sie im Zusammenhang mit der ersten Ausführungsform nach den Fig. 1 bis 3 beschrieben worden sind, festgehalten. Die in der Tierkörperaufnahmestation bereits teilweise ausgeschwenkte Halterinne 25 dieser Halteeinrichtung 21 wird dann mit Hilfe der Hilfsenergiequelle gemäß Fig. 6 oder der Führungsschiene 71 gemäß Figuren 4 und 5 weiter verschwenkt in diejenige Lage, in welcher sich der Tierkörper 13 in der gewünschten Stellung befindet. In dieser Stellung wird dann der Tierkörper 13 entlang der geraden Längsstrecke der Karussellbahn 67 weiterbewegt. Durch die Synchronisation der Karussellbewegungen zwischen Halteeinrichtungskarussell 65 und Abstechkarussell 93 wird zu Beginn dieser Längsstrecke 67a der Karussellbahn 67 ein Hohlstechmesser 95 dem weitergeförderten, in der gewünschten Stellung gehaltenen Tierkörper 13 gegenüberliegend zur Verfügung gestellt. Das Abstechmesser 95 kann dann von Hand oder mittels einer automatischen Abstechvorrichtung in die anzustechende Ader des Tierkörpers gestoßen werden. Das dabei aus dem Tierkörper austretende Blut, das als Speiseblut verwenden soll, gelangt dann durch den an das Hohlstechmesser 95 angeschlossenen Blutschlauch 97 in den Blutsammelbehälter 99. Auf diese Weise tritt keine Verschmutzung des Speiseblutes auf, die dann zu erwarten wäre, wenn das Blut in herkömmlicher Weise über den oftmals verschmutzten Tierkörper in eine Sammelrinne abläuft. Da sich das in den Tierkörper 13 gestoßene Hohlstechmesser 95 mit dem weiterbewegten Tierkörper mitbewegt, kann der Abstechvorgang und der daran anschließende Ausblutvorgang ohne eine Unterbrechung der Förderbewegung der Tierkörper durchgeführt werden. Die Länge des Halteeinrichtungskarussells 65 und die Länge des Abstechkarussells 93 werden vorzugsweise in Abhängigkeit von der Geschwindigkeit, mit welcher der Abstechvorgang durchgeführt werden kann, und in Abhängigkeit von der Ausblutdauer des abgestochenen Tierkörpers gewählt.

Am Ende der Längsstrecke 67a der Karussellbahn 67 des Halteeinrichtungskarussells 65 wird der Tierkörper 13 aufgrund der Umlenkung der Förderkette 85 über die Umlenkrolle 89 aus der Halterinne 35 der Halteeinrichtung 21 herausgezogen. Vorzugsweise wird die Förderkette 85 so geführt, daß dabei oder kurz danach der Tierkörper 13 auch vom Hohlstechmesser 95 entfernt und dieses dadurch aus dem Tierkörper herausgezogen wird.

Zwischen den durch das Hindernis geförderten Tierkörpern und den Halteeinrichtungen des Halteeinrichtungskarussells entsteht an der Tierkörperaufnahmestation ein reißverschlußartiges Einfädeln und an der Tierkörperabgabestation ein reißverschlußartiges Auseinanderfädeln, und diesem reißverschlußartigen Betrieb wird während der Zeitdauer des eingefädelten Zustandes in gleichlaufender Bewegung der Abstech- und Ausblutvorgang überlagert.

**Patentansprüche**

1. Vorrichtung zum Halten eines hängend geförderten Tierkörpers in gewünschter Stellung, mit einer Halteeinrichtung (21), in die der Tierkörper (13) in einer vorbestimmten Lage einbringbar ist und die den Tierkörper (13) in der gewünschten Stellung hält, dadurch gekennzeichnet, daß der Halteeinrichtung (21) ein Hindernis (15, 17) vorgeschaltet ist, das durch Zusammenwirken mit nicht zum Aufhängen benutzten, seitlich abstehenden Beinen (14) des Tieres den Tierkörper (13) bei dessen Weiterförderung in eine Lage mit dem Rücken voraus dreht, und daß die Halteeinrichtung (21) den Tierkörper (13) in der vom Hindernis (15, 17) bewirkten Lage annimmt und in dieser Lage oder nach einer weiteren Lageveränderung in der gewünschten Stellung hält.

2. Vorrichtung nach Anspruch 1, dadurch gekennzeichnet, daß das Hindernis durch beidseits der Förderbahn (11) angeordnete Zäune (15, 17) mit vertikal verlaufenden Hindernisstreben (16) gebildet ist, daß die Zäune (15, 17) in einem Mittelteil (15a, 17a), in dem sie parallel zur Förderbahn (11) verlaufen, einen Abstand voneinander haben, der etwas größer ist als der Tierrumpfdurchmesser im Bereich der Zäune (15, 17), und daß den Mittelteilen (15a, 17a) Anfangsteile (15b, 17b) der Zäune (15, 17) vorausgehen, die in trichterartig sich verjüngendem Abstand von der Förderbahn (11) auf die Mittelteile (15a, 17a) zulaufen.

3. Vorrichtung nach Anspruch 1 oder 2, dadurch gekennzeichnet, daß sich die Halteeinrichtung (21) in Ruhestellung seitlich neben der Förderbahn (11) befindet und aus ihrer Ruhestellung quer zur Förderrichtung in eine Haltestellung, in der sie den Tierkörper (13) in der gewünschten Stellung hält, bewegbar ist.

4. Vorrichtung nach einem oder mehreren der Ansprüche 1 bis 3, dadurch gekennzeichnet, daß die Halteeinrichtung (21) mit dem geförderten Tierkörper (13) mitbewegbar ist.

5. Vorrichtung nach einem oder mehreren der Ansprüche 1 bis 4, dadurch gekennzeichnet, daß die Halteeinrichtung (21) eine etwa vertikal verlaufende, U-förmige Halterinne (35) für die Aufnahme wengistens eines Teils des Tierkörpers (13) aufweist.

6. Vorrichtung nach Anspruch 5, dadurch gekennzeichnet, daß die Halterinne (35) zur Übernahme des zu haltenden Tierkörpers (13) mit der Rinnenöffnung zum Rücken des ankommenden Tierkörpers (13) richtbar und zur Freigabe des Tierkörpers (13) mit der Rinnenöffnung in Förderrichtung weisend drehbar ist.

7. Vorrichtung nach Anspruch 5 oder 6, dadurch gekennzeichnet, daß die Halterinne (35) an mindestens einem quer zur Förderrichtung verschwenkbaren Arm (27, 29) befestigt ist.

8. Vorrichtung nach einem oder mehreren der Ansprüche 1 bis 7, dadurch gekennzeichnet, daß mehrere Halteeinrichtungen (21) auf einer gemeinsamen geschlossenen Bahn umlaufend zu einem Halteeinrichtungskarussell (65) zusammengefügt sind, das eine dem Hindernis (15, 17) nachgeordnete Tierkörperaufnahmestation und eine Tierkörperabgabestation aufweist, und daß dem Halteeinrichtungskarussell (65) eine Tierkörperfördervorrichtung (85, 87, 89, 91) zugeordnet ist, mit der jeder Tierkörper am Hindernis (15, 17) vorbei zu der jeweils in der Tierkörperaufnahmestation ankommenden Halteeinrichtung und, von dieser in der gewünschten Stellung gehalten, bis zur Tierkörperabgabestation förderbar ist.

9. Vorrichtung nach Anspruch 8, dadurch gekennzeichnet, daß die Halteeinrichtungen (21) zwischen Tierkörperaufnahmestation und Tierkörperabgabestation mittels Hilfsenergiequellen, vorzugsweise fluidbetätigte Zylinder-Kolben-Einheiten, in die den Tierkörper in der gewünschten Stellung haltende Lage bewegbar sind.

10. Vorrichtung nach Anspruch 8, dadurch gekennzeichnet, daß jede Halteeinrichtung (21) mit einem Steuerkurvenfolgeglied (73 ; 83) versehen ist, das mit einer dem Halteeinrichtungskarussell (65) zugeordneten Steuerkurve (71) derart zusammenwirkt, daß die Halteeinrichtungen (21) im Karussellbahnbereich zwischen Tierkörperaufnahmestation und Tierkörperabgabestation in die Lage gedrängt werden, in der sie die Tierkörper (13) in der gewünschten Stellung halten.

11. Vorrichtung nach Anspruch 8 oder 9, dadurch gekennzeichnet, daß dem Halteeinrichtungskarussell (65), gegenüber dem Bereich zwischen Tierkörperaufnahmestation und Tierkörperabgabestation, ein mit dem Halteeinrichtungskarussell (65) synchrom umlaufendes Abstechkarussell (93) zugeordnet ist, das auf einer geschlossenen Bahn umlaufende Abstechmesser (95) aufweist, die während des Synchronlaufs von Halteeinrichtungskarussell (65) und Abstechkarussell (93) je einer der Halteeinrichtungen (21) gegenüberstehen und von Hand oder automatisch in die abzustechende Ader des von der jeweiligen Halteeinrichtung (21) gehaltenen Tierkörpers (13) einstechbar und mit dem weitergeförderten Tierkörper (13) mitbewegbar sind.

12. Vorrichtung nach Anspruch 11, dadurch gekennzeichnet, daß die Abstechmesser als Hohlstechmesser (95) ausgebildet sind, deren Hohlrohrteile über Blutschläuche (97) mit einem Blutsammelbehälter (99) verbunden sind.

## Claims

1. An apparatus for holding an animal body conveyed in suspending manner in a desired position, comprising a holding means (21) into which the animal body (13) is adapted to be introduced in a predetermined position and which holds the animal body (13) in the desired position, characterized in that, upstream of the holding means (21), there is disposed an obstacle (15, 17) which, by co-operation with the laterally projecting legs (14) of the animal that are not used for suspending the animal, rotates the animal body (13) into a position with the back leading as the animal body (13) is conveyed further, and in that the holding means (21) receives the animal body (13) in the position effected by the obstacle (15, 17) and holds the animal body (13) in this position or, after an additional change of position, in the desired position.

2. An apparatus according to claim 1, characterized in that the obstacle is constituted by fences (15, 17) disposed on both sides of the conveyor path (11) and having vertically extending obstacle struts (16), that the fences (15, 17) are spaced apart from each other in a central part (15a, 17a), in which they extend parallel to the conveyor path (11), by a distance which is somewhat greater than the animal trunk diameter in the region of the fences (15, 17), and in that the central parts (15a, 17a) are preceded by initial parts (15b, 17b) of the fences (15, 17) extending in funnel-like tapering distance from the conveyor path (11) towards the central parts (15a, 17a).

3. An apparatus according to claim 1 or 2, characterized in that the holding means (21), when in its rest position, is disposed laterally beside the conveyor path (11) and is adapted to be moved from its rest position transversely of the conveying direction into a holding position in which it holds the animal body (13) in the desired position.

4. An apparatus according to one or several of the claims 1 to 3, characterized in that the holding means (21) is adapted to be moved along with the conveyed animal body (13).

5. An apparatus according to one or several of the claims 1 to 4, characterized in the holding means (21) comprises an about vertically extending U-shaped holding channel (35) for receiving at least a part of the animal body (13).

6. An apparatus according to claim 5, characterized in that the holding channel (35) is adapted to be directed with the channel opening facing towards the arriving animal body (13) for taking over the animal body (13) to be held, and is adapted to be rotated with the channel opening facing in conveying direction for release of the animal body (13).

7. An apparatus according to claim 5 or 6, characterized in that the holding channel (35) is mounted on at least one arm (27, 29) that is pivotable transversely of the conveying direction.

8. An apparatus according to one or several of the claims 1 to 7, characterized in that a plurality of holding means (21) are joined together to form a holding means carousel (65) revolving on a common closed path and having an animal body receiving station disposed downstream of the obstacle (15, 17), as well an animal body discharge station, and in that the holding means carousel (65) has an animal body conveyor means (85, 87, 89, 91) associated therewith which is adapted to convey each animal body past the obstacle (15, 17) to the particular holding means arriving at the animal body receiving station, and on to the animal body discharge station while the animal body is held in the desired position by said holding means.

9. An apparatus according to claim 8, characterized in that the holding means (21) are adapted to be moved, between the animal body receiving station and the animal body discharge station, into the position holding the animal body in the desired position by means of auxiliary energy sources, preferably fluid-operated piston-cylinder units.

10. An apparatus according to claim 8, characterized in that each holding means (21) is provided with a cam follower (73 ; 83) which co-operates with a cam (71) associated with the holding means carousel (65) in such a manner that the holding means (21) in the region of the carousel path between the animal body receiving station and the animal body discharge station are urged into that position in which they hold the animal bodies (13) in the desired position.

11. An apparatus according to claim 8 or 9, characterized in that, opposite to the region between the animal body receiving station and the animal body discharge station, the holding means carousel (65) has a slaughtering carousel (93) associated therewith that revolves synchronously with the holding means carousel (65) and has slaughtering knives (95) which revolve on a closed path and which, during the synchronous operation of the holding means carousel (95) and the slaughtering carousel (93), are each opposed to a holding means (21) and are adapted to be caused manually or automatically to pierce the vein to be pierced of the animal body (13) held by the particular holding means (21), and are adapted to be moved along with the animal body (13) conveyed further.

12. An apparatus according to claim 11, characterized in that the slaughtering knives are designed as hollow slaughtering knives (95) whose hollow tubular parts are connected to a blood collecting container (99) *via* blood hoses (97).

**Revendications**

1. Dispositif de maintien, dans une position voulue, d'une carcasse d'animal transportée suspendue, comportant un dispositif de maintien (21) dans lequel la carcasse (13) peut être amenée dans une situation prédéterminée et qui maintient la carcasse (13) dans la position voulue, caractérisé en ce qu'en amont du dispositif de maintien (21) est monté un obstacle (15, 17) qui, par collaboration avec les pattes (14) de l'animal qui dépassent latéralement et ne sont pas utilisées pour le suspendre, fait tourner la carcasse (13), lors de la suite de son transport, dans une situation avec le dos en avant ; et en ce que le dispositif de maintien (21) reçoit la carcasse (13) dans la situation obtenue par l'obstacle (15, 17) et, dans cette situation ou après un autre changement de situation, la maintient dans la position voulue.

2. Dispositif selon la revendication 1, caractérisé en ce que l'obstacle est formé par des barrières (15, 17) disposées des deux côtés du chemin du transporteur (11) avec des montants (16) qui courent verticalement ; en ce que les barrières (15, 17), dans une partie médiane (15a, 17a), dans laquelle elles courent parallèlement au chemin du transporteur (11), sont à une distance l'une de l'autre qui est un peu supérieure au diamètre du tronc de l'animal dans la zone des barrières (15, 17), et en ce que les parties médianes (15a, 17a) sont précédées par des parties d'entrée (15b, 17b) des barrières (15, 17) qui vont vers les parties médianes (15a, 17a) avec une distance, par rapport au chemin du transporteur (11), qui va en diminuant à la façon d'un entonnoir.

3. Dispositif selon la revendication 1 ou 2, caractérisé en ce que, en position de repos, le dispositif de maintien (21) se trouve sur le côté, à côté du chemin du transporteur (11) ; et en ce qu'on peut le faire passer de sa position de repos, transversalement par rapport à la direction du transport, dans une position de maintien dans laquelle il maintient la carcasse (13) dans la position voulue.

4. Dispositif selon une ou plusieurs des revendications 1 à 3, caractérisé en ce que le dispositif de maintien (21) peut être emmené avec la carcasse transportée (13).

5. Dispositif selon une ou plusieurs des revendications 1 à 4, caractérisé en ce que le dispositif de maintien (21) présente une goulotte de maintien (35) en forme de U, courant verticalement, pour recevoir au moins une partie de la carcasse (13).

6. Dispositif selon la revendication 5, caractérisé en ce que la goulotte de maintien (35) peut s'orienter, pour recevoir la carcasse (13) à maintenir, avec l'ouverture de la goulotte dirigée vers le dos de la carcasse (13) qui arrive et, pour libérer la carcasse (13), peut tourner avec l'ouverture de la goulotte dirigée dans la direction du transport.

7. Dispositif selon la revendication 5 ou 6, caractérisé en ce que la goulotte de maintien (35) est fixée au moins à un bras (27, 29) qui peut pivoter transversalement par rapport à la direction du transport.

8. Dispositif selon une ou plusieurs des revendications 1 à 7, caractérisé en ce que plusieurs dispositifs de maintien (21) sont regroupés sur un chemin fermé commun périphérique pour donner un carrousel de dispositifs de maintien (35) qui présente une station de réception des carcasses disposée en aval de l'obstacle (15, 17) et une station de dégagement des carcasses ; et en ce qu'au carrousel des dispositifs de maintien (65) correspond un dispositif de transport des carcasses (85, 87, 89, 91) à l'aide duquel chaque carcasse peut être amenée, en passant près de l'obstacle (15, 17), au dispositif de maintien qui arrive respectivement dans la station de réception des carcasses et, maintenue par ce dispositif dans la position voulue, peut être transportée jusqu'à la station de dégagement des carcasses.

9. Dispositif selon la revendication 8, caractérisé en ce que les dispositifs de maintien (21) peuvent se déplacer entre la station de réception des carcasses et la station de dégagement des carcasses au moyen de sources auxiliaires d'énergie, de préférence au moyen de vérins manœuvrés par un fluide, dans la situation qui maintient la carcasse dans la position voulue.

10. Dispositif selon la revendication 8, caractérisé en ce que chaque dispositif de maintien (21) comporte un élément de suivi de la courbe de commande (73 ; 83) qui collabore avec une courbe de commande (71) correspondant au carrousel de dispositifs de maintien (65) de façon telle que le dispositif de maintien (21), dans la zone du chemin du carrousel située entre la station de réception des carcasses et la station de dégagement des carcasses, sont poussés dans la situation dans laquelle ils maintiennent les carcasses (13) dans la position voulue.

11. Dispositif selon la revendication 8 ou 9, caractérisé en ce qu'au carrousel des dispositifs de maintien (65) correspond, en face de la zone située entre la station de réception des carcasses et la station de dégagement des carcasses, un carrousel de saignée (93) qui tourne en synchronisme avec le carrousel de dispositifs de maintien (65) et qui présente, tournant sur un chemin périphérique fermé, des couteaux de saignée (95) qui, pendant la course en synchronisme du carrousel de dispositifs de maintien (65) et du carrousel de saignée (93), sont respectivement en face de l'un des dispositifs de maintien (21), peuvent être enfoncés, à la main ou automatiquement, dans la veine à saigner de la carcasse (13) maintenue dans le dispositif de maintien respectif (21) et peuvent être emmenés avec la carcasse (13) dont le transport se poursuit.

12. Dispositif selon la revendication 11, caractérisé en ce que les couteaux de saignée sont conçus sous forme de couteaux de saignée creux (95) dont les parties tubulaires creuses sont reliées, par l'intermédiaire de tubes souples pour le sang (97), avec un récipient de collecte du sang (99).

11
23
25
21
35
37
39
47
49
13
14
19
59
15
15a
15b
16
17
17a
17b

FIG.1

23
33
41
29
39
35
37
37
47
25
31
27
39
19
59
15a
15
15b

FIG. 2

57
23
59
23
51
31
45
49
47
55
53
41
43
29
15
35
39
16
37
13
FIG. 3

65
67
71c
71
85
89
93
99
95
97
13
21
71a
67a
87
91
17
29
69
73
71b
27
35
15

FIG. 4

FIG. 5
81
79
79
85
69
67
77
67
81
27a (29a)
75
79
79
75
27b (29b)
83
71
83
27 (29)
13
35
21
21

FIG. 6
103
101
95
97
93
99
105
13
97
21
65
27 (29)
21
35